# EUROPEAN PATENT SPECIFICATION

(11) **EP 0 878 155 B1**
(45) Date of publication and mention of the grant of the patent: **22.10.2008**
(21) Application number: 98114156.7
(22) Date of filing: 23.03.1993
(51) Int. Cl.: A47G 1/17

(54) **Article support using stretch releasing adhesives**
Artikelträger welcher dehhnungsbare Kleber freilässt
Support d'article utilisant des adhésifs qui se décollent par extension

(43) Date of publication of application: 18.11.1998
(62) Divisional of application: 93908480.2
(73) Proprietor: MINNESOTA MINING AND MANUFACTURING COMPANY, St. Paul, Minnesota 55133-3427 (US)
(72) Inventor: Rodrigues, Alex, Jr., PO Box 33427, Saint Paul, MN 55133-3427 (US); Carlson, Bruce W., PO Box 33427, Saint Paul, MN 55133-3427 (US); Hamerski, Michael D., P.O.Box 33427 Saint Paul, MN55133-3427 (US); Bries, James L., P.O.Box 33427 Saint Paul,MN55133-3427 (US)
(74) Representative: Texier, Christian

(56) References cited:
- WO-A-91/06782
- WO-A-92/11333
- DE-A- 3 632 819

## Description

### Technical field

This invention relates to article supports, and more particularly to articles supports adapted to be rapidly adhered and removed from a surface.

### Background

Hooks and other article supports are commonly used in both households, institutions, and industry for a variety of purposes such as hanging pictures, towels, garments, tools, calendars, posters and other articles. Conventional hooks often require forming holes in cabinets, walls, or the like as fasteners such as screws or nails are used for attaching them. Alternatively, hooks may be adhered by adhesive tapes, but tapes that have strong holding power are typically difficult to remove cleanly from the wall without scraping or otherwise damaging the surface of the wall.

Coassigned and copending U.S. patent application U.S.S.N. 07/802,061 entitled, "Removable Adhesive Tape", and PCT Internation Application No. PCT/US91/09472, to Kreckel et al., disclose a stretch releasing adhesive tape.

Those documents disclose an easily removable, pressure-sensitive adhesive tape comprising a highly extensible, substantially non-recovering backing.

The tape is capable of being firmly bonded to a substrate and removed therefrom by being stretched at an angle of no greater than about 35 degrees from the surface of the substrate. A problem associated with this type of tape is that zone persons find it difficult to grasp for removal. An uncomfortable amount of finger pressure may be required to grip the tape firmly enough to allow removal.

### Brief Description of the Invention

The present invention as claimed in claim 1 advances the field by providing a very convenient way to adhere, and later cleanly remove, article supports to substrates such as walls, windows and cabinetry. Stated generally, the invention can be described as an article support adapted to adhere to a substrate. The article support includes a base member, a stretch release adhesive tape adhered to that base member, and some means for gripping the stretch release adhesive tape. These items are arranged so that when the base member is adhered to the substrate by the stretch release adhesive tape, the base member is capable of being removed from the substrate by gripping the gripping means and stretching the stretch release adhesive tape at an angle no greater than about 35 degrees from the surface of the substrate. The gripping means preferably resists disassociation from the stretch release adhesive tape during the act of removal. In many practical embodiments, the stretch release adhesive tape will be provided with a layer of release liner to protect the adhesive (e.g. from dirt, dust and other matter which will deliteriously affect the adhesive) until the article support is to be used.

The stretch release adhesive tape will have a backing, and at least one layer of adhesive; most commonly it will have two layers of adhesive. The backing may be a singular layer, or it may be two or more layers laminated together as long as the base member is capable of being removed from the substrate by gripping the gripping means and stretching the stretch release adhesive tape at an angle no greater than about 35 degrees from the surface of the substrate.

In one group of embodiments, the above discussed gripping means is a handle, and the stretch release adhesive tape is adhered to the handle around a surface conformed so as to compress at least a portion of the tape during the removal. While many physical arrangements which achieve this are possible, good results are achieved when the stretch release adhesive tape is wrapped around a portion of said handle in such a manner that the stretch release adhesive tape makes a substantially 180 degree bend. A suitable handle may also have features which make it comfortable to grasp with the fingers; for example, a "D-shaped" ring with the stretch release adhesive tape wrapped around the flat of the "D" shape.

In many of the most convenient embodiments, the base member will be rather generic, suitable for attaching various classes of support member such as hooks, towel racks, picture frame supports, or the like. In these embodiments, the base member will comprise a means for attaching such a support member. Conveniently, such an attaching means may be a pair of complimentary dovetail slides on each of the base member and the support member. Other expedients will suggest themselves to the skilled artisan.

It may be convenient to have a means for locking the support member to the base member, either releasably or permanently. Conveniently, a releasable latch may serve as the locking means.

Sometimes it will be convenient to provide an article support such that when the support member is removed from the base member, the gripping means need not be pulled by the fingers, but instead engages the support member as it, for example, slides along a dovetail slide. Then the stretch release adhesive tape is automatically stretched as the support member is pulled so as to remove the base member from the substrate.

As an aid in removal of the stretch release adhesive tape from the substrate, the base member may conveniently have indicia explaining the action involved in removing said base member from the substrate. In those embodiments where the base member has a means for attaching a support member, it may be particularly preferred that such indicia are placed where they are hidden from view when the support member is attached to the base member, but visible when the support member is removed.

In some embodiments of the invention, it may be desirable to have the support member support a substantial amount of weight -- more than can be supported by the holding strength of a single base member. This can be accommodated within the definition of the invention by providing a support member that is adapted to engage a plurality of base members that are generally oriented in a single plane simultaneously.

In other embodiments a specialized support member can be provided that is adapted to engage a plurality of base members simultaneously in a way that has the stretch release adhesive tape on the base members oriented in more than one plane. In particular, such a support member can hold two inexpensive, generic base members back-to-back so that e.g. a clock can be adhered to a wall. When desired the stretch release adhesive tape makes it possible to remove the base members cleanly from each substrate, and the object adhered can be taken down temporarily for use or maintenance.

Although for many of the applications which are contemplated for the present invention the base member will be rigid, article supports where the base member is a bendable, but not significantly stretchable film, are also considered within the definition of the invention. Such a construction will be useful for e.g. removable labels.

### Brief Description of the Drawings

A more complete understanding of the invention and its advantages will be apparent from the Detailed Description taken in conjunction with the accompanying Drawings, in which:
**Fig. 1** is a plan view of a length of stretch release adhesive tape adhered to a handle, the handle being one way the gripping means con be embodied;
**Fig. 2** is a side view of the arrangement shown in **Fig. 1**;
**Fig. 3** is the view of **Fig. 2**, except that the stretch release adhesive tape is shown under a tensile load, so that the compression of a portion of the tape can be depicted;
**Fig. 4** is a perspective view of a base member provided with a double stick stretch release adhesive tape adhered to a D-shaped handle member used as a means for gripping the tape;
**Fig. 5** is a side view of the embodiment of **Fig. 4**;
**Fig. 6** is a perspective view of an article support according to the present invention showing a support member being attached to a base member;
**Fig. 6a** is a top view of the embodiment of **Fig. 6**;
**Fig. 7** is a perspective view of an alternate embodiment of the present invention with the support member partially disengaged from its base member, in which the stretch release adhesive tape is automatically stretched as the support member is pulled so as to remove the base member from the substrate;
**Fig. 8** is the embodiment of **Fig. 7** illustrating the support member completely disengaged from the base member, and being used to pull the stretch release adhesive tape;
**Fig. 9** is the scene of **Fig. 8** with the reverse angle shown so as to emphasize the way the stretch release adhesive tape debonds from the base member;
**Fig. 10** is a perspective view of an alternate embodiment of the invention in which the support member is adapted to engage a two base members oriented in a single plane simultaneously; and
**Fig. 11** is an exploded perspective view of an alternate embodiment not according to the invention in which the support member is adapted to engage two base members so that the stretch release adhesive tape on the two base members are oriented back-to-back.

### Detailed Description

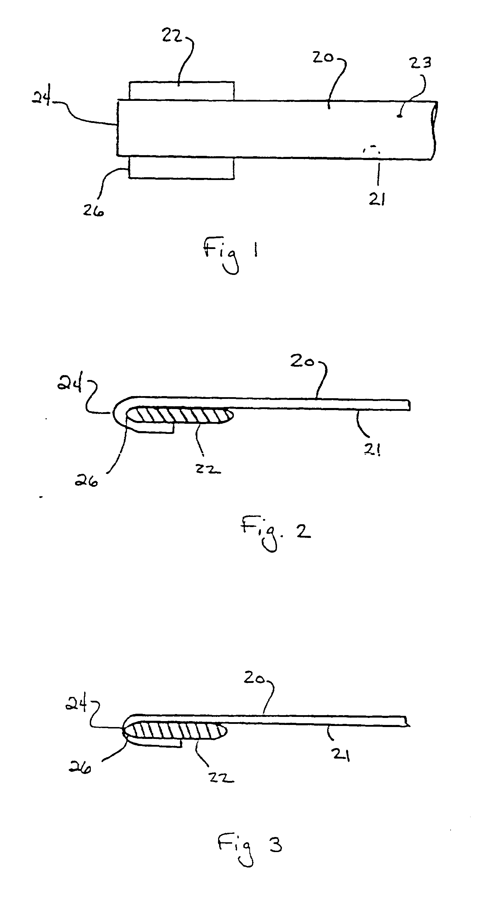

Referring to **Fig. 1**, a plan view of a length of stretch release adhesive tape **20** adhered by a layer of pressure sensitive adhesive **21** to a handle **22** is illustrated. The handle **22** serves as a gripping means capable of resisting disassociation from stretch release adhesive tape **20** when the handle is pulled to put the stretch release adhesive tape under a tensile load. Depending on the exact function for which the stretch release adhesive tape **20** is to be used, a second layer of pressure sensitive adhesive **23** will often be present. It will be seen that a portion **24** of the stretch release adhesive tape **20** is adhered to the handle **22** around a surface **26** conformed so as to compress at least a portion of the stretch release adhesive tape during such tensile loading.

Referring to **Fig. 2**, it will be seen that the stretch release adhesive tape **20** is wrapped around the surface **26** of said handle **22** in such a manner that the stretch release adhesive tape makes an angle with respect to itself, so long as the tape **20** does not disassociate from the handle **22**. Preferably the angle is substantially 180 degrees. Referring to **Fig. 3** the stretch release adhesive tape **20** is shown under a tensile load, so that the compression of portion **24** can be readily visualized.

Referring now to **Fig.'s 4 and 5**, a perspective view of a base member **30** is illustrated. This base member **30** is provided with a double stick stretch release adhesive tape (adhered to the back and not readily seen in this view). This double stick stretch release adhesive tape also is inserted through and wrapped around an opening of a generally "D-shaped" handle also designated as reference character **22**. It will be observed that the tape **20** makes a 180 degree bend back along itself.

The base member **30** depicted here is deliberately intended to be highly generic, suitable for attaching various classes of support member. For this purpose the base member **30** has the male half of a dovetail slide, the two portions of which are designated **32** and **34**, so that these slides can serve as a means for attaching such a support member.

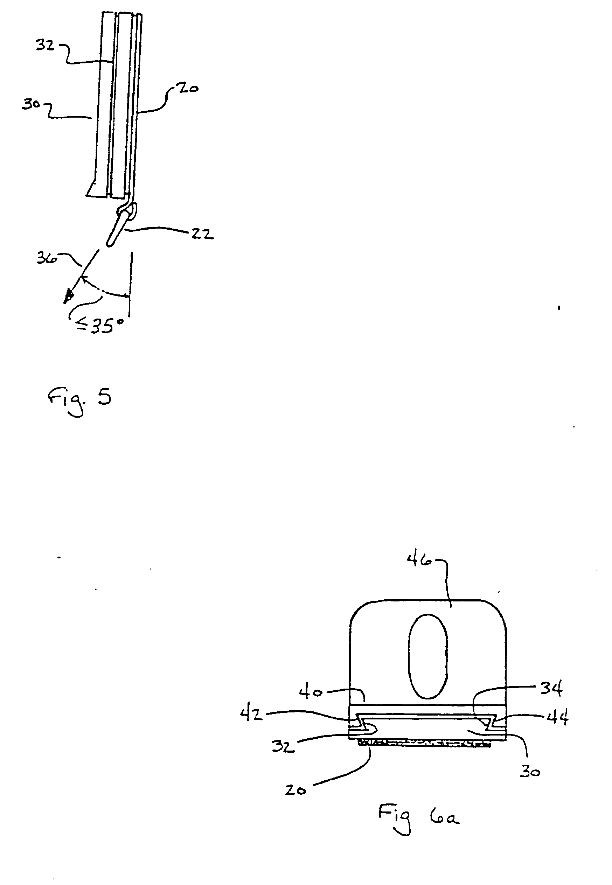

A direction arrow **36** shows the direction of pulling on the gripping means **22** which will serve to remove the base member **30** from a substrate. The depicted base member **30** has indicia **38** printed on it to conveniently explain the action involved in removing the base member from the substrate. For example, the indicia may comprise pictographs or icons for indicating that handle should be pulled approximately directly down to remove the tape **20** (and thus the base **30**) from the substrate. In **Fig. 5**, the dovetail **32** can more readily be seen, and direction arrow **36** is able to more clearly indicate that the stretch release adhesive tape **20** is to be pulled at an angle of no greater than 35 degrees to remove the base member **30** from the substrate.

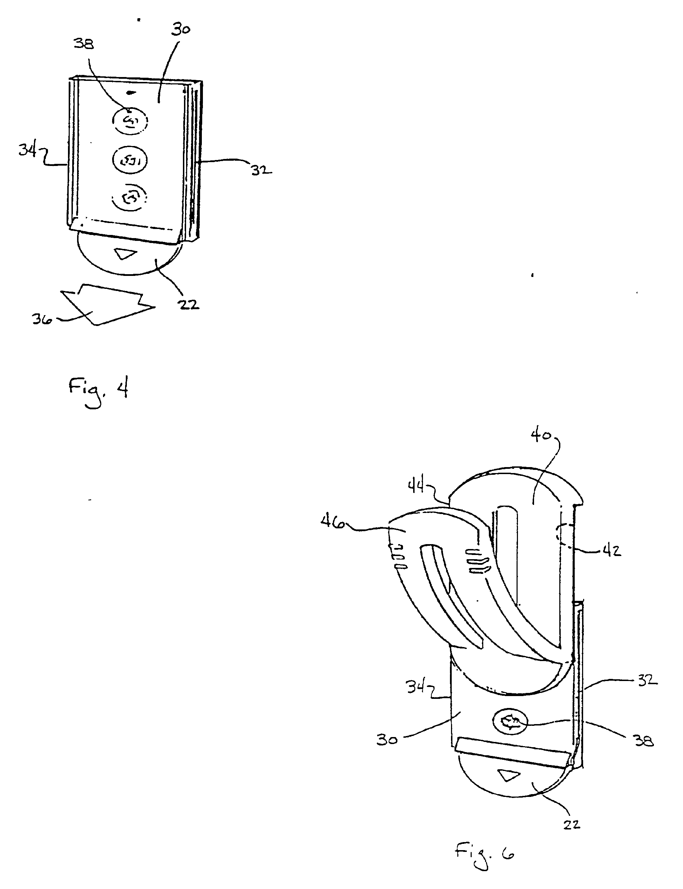

Referring to **Fig. 6**, the base member **30** depicted in **Fig. 5** is again shown in perspective view, this time with an article support **40** being attached to the base member using a sliding engagement between the male dovetail slides **32** and **34** on the base member and female dovetail slides **42** and **44** on the support member. The support member **40** is depicted with a rounded hook **46**, intending that that representation be considered illustrative of many functionalities which could alternatively be used. Other examples of support members not according to the invention include catches, hook and loop fasteners, eyelets, magnets, corkboard, suction cups, ribs and other such structures. In Fig. **6a**, the interaction between the male dovetail slides **32** and **34** on the base member and female dovetail slides **42** and **44** on the support member can more readily be seen.

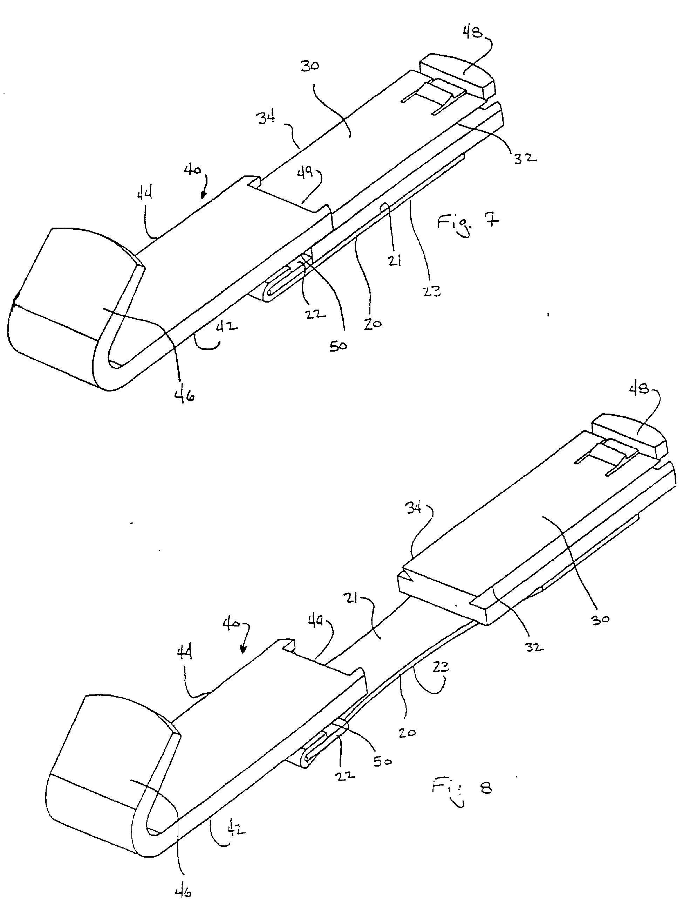

Referring to **Fig. 7**, a perspective view of an alternate embodiment of the present invention in which the stretch release adhesive tape **20** is automatically stretched as the support member **40** is removed from the base member **30**, so as to at the same time remove the base member from the substrate. The support member **40** is shown partly slid down the base member **30**; in this embodiment, a releasable latch **48** serves as a means for locking the support member to the base member, acting on a recess **49**. The base member **30** and the support member **40** are free to slide past each other via the dovetail slides **32**, **34**, **42**, and **44** when the releasable latch is depressed away from recess **49**. The handle **22** has just engaged a ledge **50** in this figure, so that the stretch release adhesive tape **20** will be pulled as the support member **40** is disengaged from the base member **30**.

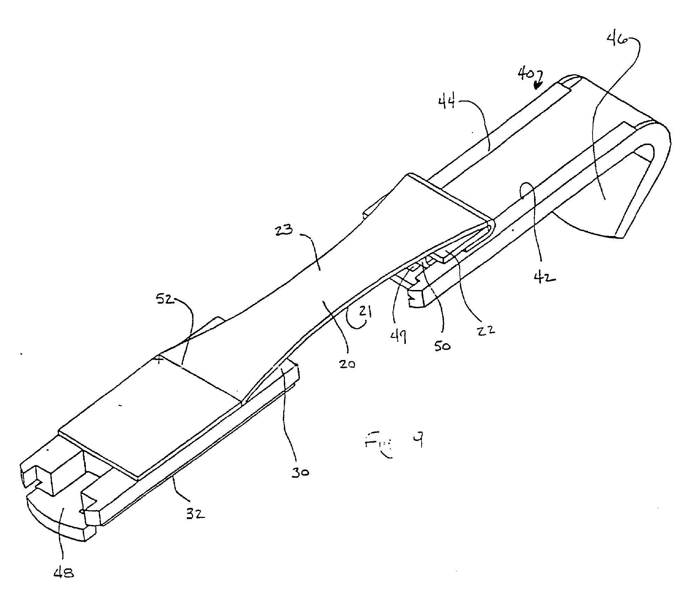

In **Fig. 8**, the action depicted in **Fig. 7** has proceeded, with the support member **40** completely disengaged from the base member **30**, and being used to pull the stretch release adhesive tape **20**. In **Fig. 9**, this same scene is shown from the reverse angle, emphasizing the way the stretch release adhesive tape **20** debonds from the base member **30**, and similarly from any substrate to which the base member is adhered. Along the debond line **52**, the backing of the stretch release adhesive tape **20** is yielding, and this physical action arranges that only a tiny amount of the adhesive layers **21** and **23** are asked to debond at any one time, reducing the chances that the substrate will be damaged by the removal. It will be particularly observed that stretch release adhesive tape **20** is bent around handle **22** forming a substantially 180 degree bend.

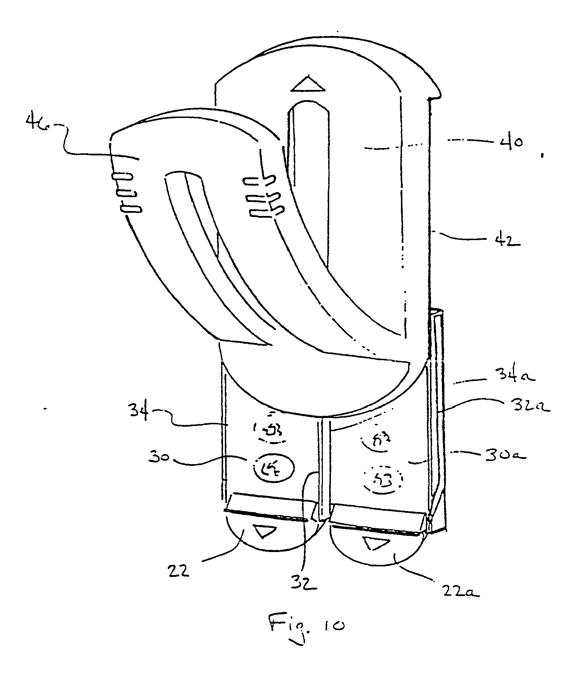

Referring now to **Fig. 10** a perspective view of an alternate embodiment of the invention in which the support member **40** is adapted to engage a plurality of base members simultaneously is illustrated. A second base member **30a** is depicted, with parts analogous to those of base member **30** showing an "a" suffix. Base members **30** and **30a** in this embodiment have simply been adhered side by side, and a wider support member **46** engaged to both of them simultaneously, dovetail slides **32** and **34a** becoming superfluous in this arrangement. Other arrangements will readily suggest themselves in the light of this teaching, where two or more base members which are identical for ease of manufacturing and inventorying are set up in a prearranged pattern on the substrate, and a single support member engages all of them simultaneously. It should be appreciated that an advantage to using several similar generic base members is that a limited width of tape is debonded at any one time which further reduces the chance of damage to the substrate.

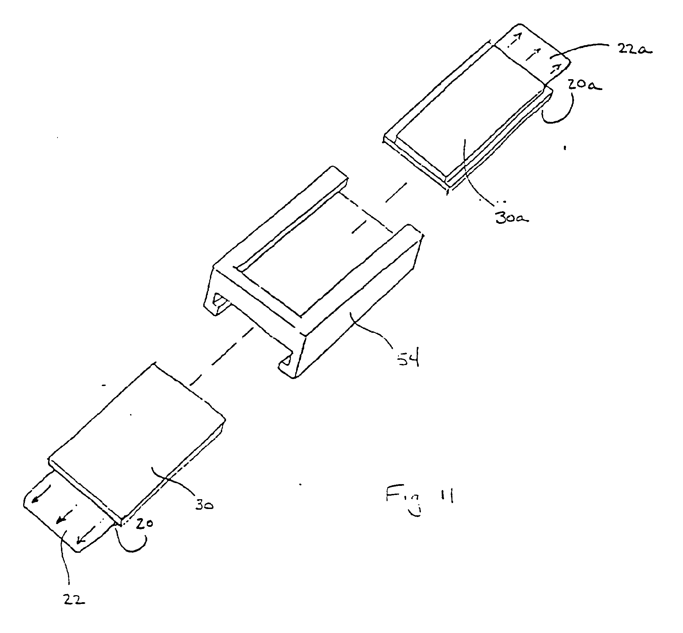

Referring now to **Fig. 11**, an exploded perspective view of an alternate embodiment not according to the invention is illustrated. In this view, a support member **54** is seen which is adapted to engage two similar base members **30** and **30a** so that the stretch release adhesive tape **20** and **20a** with their gripping means **22** and **22a** on the two base members are oriented back-to-back. With the depicted device, an appliance such as a clock can be mounted on a wall, with one base member adhered to the clock and the other base member adhered to the wall. Gravity and physical interference suffice to hold both base members in the specialized support member. However, the clock is easily dismounted for winding or the like by lifting its adhered base member out of the support member. When such mounting is no longer desired the stretch release adhesive tape makes it possible to remove the base members cleanly from both the clock and the wall.

It will be noted that one of the advantages of the present invention is that when a separate base member and support member or used, each can be optimized for its purpose, with different materials and manufacturing methods used. For example, a highly generic base element which will be visually concealed by a decorative support element may be made of materials which balance the properties of low cost and good adhesion to the stretch release adhesive tape. Polyethylene or polypropylene, extruded with a shape possessing an appropriate dovetail cross-section is considered particularly preferred for these applications.

In contrast, the support member need not be optimized for adhesion, and depending on the contemplated use other desirable properties may be selected for such as cost, surface appearance, suitability for accepting decorative plating, bending strength, ability to be readily injection molded, etc. Depending on the exact application, rigid polyvinyl chloride, high impact polystyrene, or nylon could be advantageously used.

In the interest of a complete presentation, illustrative examples of suitable stretch release adhesive tapes will presented. U.S.S.N. 07/802,061 **Removable Adhesive Tape** to Kreckel, and PCT Application No. PCT/US91/09472, provide a more complete discussion of alternatives. Additional background on styrene-butadiene block copolymer adhesives which are useful in the context of the present invention can be found in coassigned U.S. Patents 4,699,842 and 4,835,217, both to Jorgensen et al, both pressure sensitive adhesives having a broad useful temperature range.

### Example 1

An adhesive was made by partially polymerizing 100 g of a blend containing 90% by weight isooctylacrylate monomer and 10% by weight acrylic acid monomer and 0.04 part per hundred 2,2-dimethoxy-2-phenyl acetophenone ("Irgacure 651") to yield a coatable syrup having a viscosity of about 5,000 cps. To this syrup was then added an additional 0.25 g of a blend containing 90% by weight isooctylacrylate monomer and 10% by weight acrylic acid monomer and 0.04 part per hundred 2,2-dimethoxy-2-phenyl acetophenone ("Irgacure 651"), plus 0.125 g of 1,6-hexanediol diacrylate crosslinking agent. The composition was thoroughly mixed and coated onto a silicone-coated polyester film by means of a knife coater adjusted to produce an adhesive thickness of 0.125 mm. After the coated syrup was purged thoroughly with nitrogen gas, it was covered with a second silicone-coated polyester film and polymerized by means of ultraviolet radiation using a total energy of 450 mJ/cm². One layer of the adhesive was then laminated to each side of a 0.05 mm corona treated linear low density polyethylene film, forming a double-coated adhesive tape. The linear low density polyethylene film, commercially available from Consolidated Thermoplastics Co., had an elastic modulus of 28,968 psi, a 50% modulus of 4,000 psi, a yield stress of 1743 psi, a yield strain of 17.3%, a tensile strength of 7,931 psi, an elongation of 748%, and a recovery of 5.4%.

### Examples 2-6

Adhesive tapes were made generally according to **Example 1**, but the level of cross-linking agent was varied. Examples were made having crosslinker levels of 0.01, 0.025, 0.05, 0.10 and 0.18 percent. The adhesives so made were discovered to evidence a range of stretch release adhesion properties.

### Example 7

A styrene-butadiene block copolymer adhesive was knife coated onto a silicone release liner, then dried at 175 degrees F for 15 minutes in a forced air drying oven. Adhesive films of 2.8 mil (0.07 mm) and 4.6 mil (0.14 mm) in thickness were thus made.

## Claims

1. An article support adapted to be adhered to a substrate, said article support comprising a base member (30) having a rear surface ; a support member with a hook (46) projecting away from said rear surface ; and a stretch release adhesive tape (20) having a first part adhered to the rear surface of said base member and a second part (22) projecting from the rear surface of said base member (30), said second part (22) of said stretch release adhesive tape (20) being adapted to be gripped so that when said base member (30) is adhered to the substrate by said stretch release adhesive tape (20), said base member (30) can be removed from the substrate by gripping said second part (22) of said stretch release adhesive tape (20) and stretching the stretch release adhesive tape (20) at an angle no greater than about 35 degrees from said rear surface of the base member (30) ; said article support being **characterized in that** said support and base members (40, 30) include means (32, 34 ; 42, 44) for releasably attaching said support member (40) on said base member (30) ; said support member (40) overlaying said base member (30) and said second part (22) of said stretch release adhesive tape (20) when said support member (40) is attached on said (30) base member.

2. An article support according to claim 1 wherein said gripping means comprises a handle (22), wherein said stretch release adhesive tape (20) is adhered to the handle (22) around a surface (26) conformed so as to compress at least a portion of the tape during the removal.

3. An article support according to claim 2 wherein said stretch release adhesive tape (20) is wrapped around a portion of said handle (22) in such a manner that said stretch release adhesive tape (20) makes a substantially 180 degree bend.

4. An article support according to claim 2 wherein said handle (22) is generally D-shaped.

5. An article support according to claim 1, 2, 3 or 4 wherein said attaching means comprises a pair of complimentary dovetail slides (32, 34, 42, 44) on each of said base member (30) and said support member (40).

6. An article support according to claim 1, 2, 3, or 4 wherein said attaching means comprises a means for locking said support member (40) to said base member (30).

7. An article support according to claim 6 wherein said locking means is a releasable latch (48).

8. An article support according to claim 1, 2, 3 or 4 wherein when said support member (40) is removed from said base member (30), said gripping means (22) engages said support member (40) so that said stretch release adhesive tape (20) is stretched so as to remove said base member (30) from the substrate.

9. An article support according to claim 1 wherein said base member (30) has indicia (38) explaining the action involved in removing said base member (30) from the substrate.

10. An article support according to claim 9 wherein said base member (30) comprises a means for attaching a support member (40), and wherein said indicia (38) are hidden from view when said support member (40) is attached to said base member (30).

11. An article support according to claim 1, 2, 3 or 4 wherein said support member (40) is adapted to engage a plurality of base members (30) simultaneously.

12. An article support according to claim 11 wherein said support member (40) is adapted to engage said plurality of base members (30) so that said stretch release adhesive tape (20) on each of said base members (30) are oriented in a single plane.

13. An article support according to claim 11 wherein said support member (40) is adapted to engage said plurality of base members (30) so that said stretch release adhesive tape (20) on said base members (30) are oriented in more than one plane.

14. An article support according to claim 1 wherein said stretch release adhesive tape (20) comprises a backing and at least one layer of adhesive adhered thereto.

## Patentansprüche

1. Gegenstandträger, der zum Anhaften an einem Substrat geeignet ist, wobei der Gegenstandträger ein Grundelement (30) mit einer Rückfläche, ein Trägerelement, einen Haken (46), der von der Rückfläche absteht, und ein durch Zug ablösbares Klebeband (20) mit einem ersten Teil, der an der Rückfläche des Grundelementes anhaftet, und einem zweiten Teil (22), der von der Rückfläche des Grundelementes (30) absteht, wobei der zweite Teil (22) des durch Zug ablösbaren Klebebandes (20) derart gestaltet ist, dass man ihn greifen kann, damit, wenn das Grundelement (30) durch das durch Zug ablösbare Klebeband (20) an dem Substrat angehaftet ist, das Grundelement (30) durch Greifen des zweiten Teils (22) des durch Zug ablösbaren Klebebandes (20) und Ziehen des durch Zug ablösbaren Klebebandes (20) in einem Winkel, der etwa 35 Grad von der Rückfläche des Grundelementes (30) nicht überschreitet, von dem Substrat entfernt werden kann, aufweist; wobei der Gegenstandträger **dadurch gekennzeichnet ist, dass** das Träger- und das Grundelement (40, 30) Mittel (32, 34; 42, 44) zum lösbaren Anbringen des Trägerelements (40) an dem Grundelement (30) aufweisen; das Trägerelement (40) das Grundelement (30) und den zweiten Teil (22) des durch Zug ablösbaren Klebebandes (20) überdeckt, wenn das Trägerelement (40) an dem Grundelement (30) angebracht ist.

2. Gegenstandträger nach Anspruch 1, wobei das Greifmittel einen Griff (22) aufweist, wobei das durch Zug ablösbare Klebeband (20) um eine Fläche (26) an dem Griff (22) angehaftet ist, die so angepasst ist, dass sie während der Entfernung mindestens einen Abschnitt des Bandes zusammendrückt.

3. Gegenstandträger nach Anspruch 2, wobei das durch Zug ablösbare Klebeband (20) in einer solchen Art und Weise um einen Abschnitt des Griffes (22) gewickelt ist, dass das durch Zug ablösbare Klebeband (20) im Wesentlichen um 180 Grad gebogen ist.

4. Gegenstandträger nach Anspruch 2, wobei der Griff (22) im Allgemeinen eine D-Form aufweist.

5. Gegenstandträger nach Anspruch 1, 2, 3 oder 4, wobei das Anbringmittel ein Paar komplementäre Zinkenführungen (32, 34, 42, 44) jeweils an dem Grundelement (30) und dem Trägerelement (40) aufweist.

6. Gegenstandträger nach Anspruch 1, 2, 3 oder 4, wobei das Anbringmittel ein Mittel zum Verriegeln des Trägerelementes (40) mit dem Grundelement (30) aufweist.

7. Gegenstandträger nach Anspruch 6, wobei das Verriegelungsmittel ein lösbarer Riegel (48) ist.

8. Gegenstandträger nach Anspruch 1, 2, 3 oder 4, wobei, wenn das Trägerelement (40) von dem Grundelement (30) entfernt wird, das Greifmittel (22) in das Trägerelement (40) derart eingreift, dass das durch Zug ablösbare Klebeband (20) gedehnt wird, um das Grundelement (30) vom Substrat zu entfernen.

9. Gegenstandträger nach Anspruch 1, wobei das Grundelement (30) Vermerke (38) aufweist, welche den Ablauf der Handlungen erläutern, die zum Entfernen des Grundelementes (30) vom Substrat durchzuführen sind.

10. Gegenstandträger nach Anspruch 9, wobei das Grundelement (30) ein Mittel zum Anbringen eines Trägerelementes (40) aufweist, und wobei die Vermerke (38) verborgen sind, wenn das Trägerelement (40) an dem Grundelement (30) angebracht ist.

11. Gegenstandträger nach Anspruch 1, 2, 3 oder 4, wobei das Trägerelement (40) geeignet ist, mehrere Grundelemente (30) gleichzeitig aufzunehmen.

12. Gegenstandträger nach Anspruch 11, wobei das Trägerelement (40) geeignet ist, die mehreren Grundelemente (30) derart aufzunehmen, dass das durch Zug ablösbare Klebeband (20) an jedem der Grundelemente (30) in einer einzigen Ebene ausgerichtet ist.

13. Gegeristandträger nach Anspruch 11, wobei das Trägerelement (40) geeignet ist, die mehreren Grundelemente (30) derart aufzunehmen, dass das durch Zug ablösbare Klebeband (20) an dem Grundelement (30) in mehr als einer Ebene ausgerichtet ist.

14. Gegenstandträger nach Anspruch 1, wobei das durch Zug ablösbare Klebeband (20) eine Schutzschicht und mindestens eine daran anhaftende Klebstoffschicht aufweist.

## Revendications

1. Support d'article prévu pour être collé à un substrat, ledit support d'article comportant un élément (30) d'embase présentant une surface arrière ; un élément de support comportant un crochet (46) saillant de ladite surface arrière ; et un ruban adhésif (20) décollable par étirement doté d'une première partie collée à la surface arrière dudit élément d'embase et d'une deuxième partie (22) saillant de la surface arrière dudit élément (30) d'embase, ladite deuxième partie (22) dudit ruban adhésif (20) décollable par étirement étant prévue pour être saisie de telle sorte que, lorsque ledit élément (30) d'embase est collé au substrat par ledit ruban adhésif (20) décollable par étirement, ledit élément (30) d'embase peut être retiré du substrat en saisissant ladite deuxième partie (22) dudit ruban adhésif (20) décollable par étirement et en étirant le ruban adhésif (20) décollable par étirement sous un angle ne dépassant pas environ 35 degrés par rapport à ladite surface arrière de l'élément (30) d'embase ; ledit support d'article étant **caractérisé en ce que** lesdits éléments de support et d'embase (40, 30) comprennent des moyens (32, 34 ; 42, 44) destinés à fixer de façon détachable ledit élément (40) de support sur ledit élément (30) d'embase ; ledit élément (40) de support se superposant audit élément (30) d'embase et à ladite deuxième partie (22) dudit ruban adhésif (20) décollable par étirement lorsque ledit élément (40) de support est fixé sur ledit élément (30) d'embase.

2. Support d'article selon la revendication 1, ledit moyen de préhension comportant une poignée (22), ledit ruban adhésif (20) décollable par étirement étant collé à la poignée (22) autour d'une surface (26) façonnée de manière à comprimer au moins une partie du ruban pendant le retrait.

3. Support d'article selon la revendication 2, ledit ruban adhésif (20) décollable par étirement étant enroulé autour d'une partie de ladite poignée (22) de telle manière que ledit ruban adhésif (20) décollable par étirement forme un coude sensiblement à 180 degrés.

4. Support d'article selon la revendication 2, ladite poignée (22) présentant la forme générale d'un D.

5. Support d'article selon la revendication 1, 2, 3 ou 4, ledit moyen de fixation comportant une paire de glissières complémentaires (32, 34, 42, 44) en queue d'aronde sur chacun desdits éléments (30) d'embase et (40) de support.

6. Support d'article selon la revendication 1, 2, 3 ou 4, ledit moyen de fixation comportant un moyen de bloquer ledit élément (40) de support sur ledit élément (30) d'embase.

7. Support d'article selon la revendication 6, ledit moyen de blocage étant un fermoir libérable (48).

8. Support d'article selon la revendication 1, 2, 3 ou 4, ledit moyen (22) de préhension interagissant avec ledit élément (40) de support, lorsque ledit élément (40) de support est retiré dudit élément (30) d'embase, de telle sorte que ledit ruban adhésif (20) décollable par étirement soit étiré de façon à retirer ledit élément (30) d'embase du substrat.

9. Support d'article selon la revendication 1, ledit élément (30) d'embase portant des repères (38) expliquant l'action intervenant lorsqu'on retire ledit élément (30) d'embase du substrat.

10. Support d'article selon la revendication 9, ledit élément (30) d'embase comportant un moyen de fixer un élément (40) de support, et lesdits repères (38) étant soustraits à la vue lorsque ledit élément (40) de support est fixé audit élément (30) d'embase.

11. Support d'article selon la revendication 1, 2, 3 ou 4, ledit élément (40) de support étant prévu pour interagir simultanément avec une pluralité d'éléments (30) d'embase.

12. Support d'article selon la revendication 11, ledit élément (40) de support étant prévu pour interagir avec ladite pluralité d'éléments (30) d'embase de telle sorte que ledit ruban adhésif (20) décollable par étirement sur chacun desdits éléments (30) d'embase soit orienté dans un même plan.

13. Support d'article selon la revendication 11, ledit élément (40) de support étant prévu pour interagir avec ladite pluralité d'éléments (30) d'embase de telle sorte que ledit ruban adhésif (20) décollable par étirement situé sur lesdits éléments (30) d'embase soit orienté dans plusieurs plans.

14. Support d'article selon la revendication 1, ledit ruban adhésif (20) décollable par étirement comportant une couche de protection et au moins une couche d'adhésif collée à celle-ci.
